# EUROPÄISCHE PATENTSCHRIFT

(11) **EP 0 400 165 B1**
(45) Veröffentlichungstag und Bekanntmachung des Hinweises auf die Patenterteilung: **01.09.1993**
(21) Anmeldenummer: 89109718.0
(22) Anmeldetag: 30.05.1989
(51) Int. Cl.: G01L 9/00, G01L 9/06

(54) **Drucksensor und Verfahren zu seiner Herstellung**
Pressure sensor and method for its fabrication
Capteur de pression et méthode de sa fabrication

(43) Veröffentlichungstag der Anmeldung: 05.12.1990
(73) Patentinhaber: SIEMENS AKTIENGESELLSCHAFT, 80333 München (DE)
(72) Erfinder: Ehrler, Günter, Dipl.-Phys, D-8024 Deisenhofen (DE); Platzöder, Karl, Dr./Dipl.-Phys., D-8048 Haimhausen (DE); Reichert, Hansjörg, Dr., Dipl.-Phys., D-8000 München 90 (DE)

(56) Entgegenhaltungen:
- EP-A- 0 217 071
- DE-U- 7 703 675
- GB-A- 2 069 703
- US-A- 4 028 945
- PATENT ABSTRACTS OF JAPAN, Band 7, Nr. 270 (P-240)(1415), 2 Dezember 1983; & JP-A-58 151 536

## Beschreibung

Die Erfindung betrifft einen piezoresistiven Silizium-Membran-Drucksensor nach dem Oberbegriff des Patentanspruchs 1, sowie Verfahren zur Herstellung eines Drucksensors.

Ein derartiger Drucksensor geht aus Patent Abstracts of Japan, Band 7, Nr. 270 (P-240) [1415], 2. Dezember 1983 als bekannt hervor.

Die Überlastfestigkeit von piezoresistiven Silizium-Membran-Drucksensoren, die im Niederdruckbereich ca. das 20-fache des Nenndruckes beträgt, ist für viele Anwendungen zu gering. So kann z. B. beim Messen von Druckunterschieden im Millibar-Bereich in Hochdrucksystemen in Folge von lokalem Druckabfall, z.B. durch Leitungsbruch, der volle Systemdruck als Differenzdruck auf den Drucksensor einwirken. Daher werden in der Praxis Überlastfaktoren von ca. 1.000 und mehr gefordert. Für solche Anwendungen muß eine zusätzliche Überlastsicherung in einem Drucksensor verwirklicht werden, welche unabhängig von der Druckrichtung wirksam ist, d. h. unabhängig davon, ob der Überdruck auf die Vorderseite oder auf die Rückseite der Membran des Drucksensors einwirkt.

Bisher wurden Silizium-Drucksensoren in der Regel durch aufwendige mechanische Konstruktionen mit Metallmembranen oder Überlastventilen vor Zerstörung geschützt. Dabei gehen aber wesentliche Vorteile von Silizium-Drucksensoren verloren, nämlich die Vorteile kleiner Abmessungen und geringen Gewichtes und der Vorteil der Kostengünstigkeit.

Die geringe Trägheit von Silizium-Drucksensoren stellt ein zusätzliches Problem dar (Silizium-Drucksensoren besitzen eine Eigenfrequenz von ca. 50 kHz). Die Silizium-Drucksensoren müssen daher durch vorgeschaltete Dämpfungen träger gemacht werden, da sonst die mechanischen Schutzmaßnahmen bei sehr kurzen Druckstößen versagen. Andererseits ist in vielen Anwendungsfällen gerade die schnelle Druckerfassung notwendig, so daß eine Lösung ohne Dämpfung wünschenswert ist.

Außer den bereits erwähnten markromechanischen Lösungen mittels Metallmembranen oder Überlastventilen ist auch eine mikromechanische Lösung bekannt, nämlich eine integrierte Absicherung für Überlastung von der Membranrückseite her. Diese bekannte integrierte Überlastsicherung wirkt aber nur bei Überlastungen in einer Richtung.

Der vorliegenden Erfindung liegt die Aufgabe zugrunde, einen Drucksensor der eingangs genannten Art anzugeben, der eine Überlastsicherung besitzt, die gegenüber Druckeinwirkung auf die Membran-Vorderseite schützt.

Diese Aufgabe wird erfindungsgemäß durch einen Drucksensor nach dem Patentanspruch 1 gelöst.

Bei einem Drucksensor nach der Erfindung ist die Überlastsicherung mikromechanisch in dem Halbleiterbauelement integriert. Die Kombination einer Überlastsicherung nach der Erfindung mit einer schon bekannten integrierten Absicherung für Überlastung von der Membranrückseite her läßt eine gewünschte Überlastsicherung realisieren, die in beiden Druckrichtungen, nämlich sowohl bei Überdruck auf die Vorderseite als auch bei Überdruck auf die Rückseite der Membran, wirksam ist.

Ausgestaltungen und Vorteile der Erfindung sind in den Unteransprüchen, der Beschreibung und der Zeichnung angegeben.

Ein Niederdrucksensor ist wegen der besseren Linearität vorteilhafterweise als Ringmembran-Sensor aufgebaut.

Um einen Drucksensor vor Überdruck von der Membranvorderseite her zu schützen, können zwei Maßnahmen getroffen werden:
1. Durch eine Begrenzung des Hubes D1 der Mittelinsel des Membranteiles wird die Kraft, die auf den starren Mittelteil des Membranteiles einwirkt, abgefangen. Es ergibt sich alleine schon mit dieser Maßnahme eine deutliche Steigerung der Überlastfestigkeit des Drucksensors.
2. Die Begrenzung der Durchbiegung der Membrane wird zusätzlich durch eine Auflagefläche begrenzt, welche im Abstand D2 unterhalb der Membran angeordnet ist.

Je knapper die Hubbegrenzung D1 der Mittelinsel des Membranteils eingestellt ist und je näher die Stützfläche an der Membrane liegt, das bedeutet je kleiner der Abstand D2 ist, desto höher ist die erreichte Überlastfestigkeit. Eine Begrenzung des Hubes D1 zu kleinen Werten ergibt sich lediglich daraus, daß ein Anschlag der Mittelinsel des Membranteils auf einem Trägerteil im Arbeitsbereich des Drucksensors sicher vermieden werden soll. Wegen der stark ansteigenden Nichtlinearität des Drucksensors bei großen Durchbiegungen ist der für den Meßbereich ausgenutzte Hub D1 sehr klein. Der Hub D1 hängt von der Chipgröße und von der geforderten Linearität ab. Bei Halbleiterbauelementen mit Abmessungen kleiner als 1 cm x 1 cm ist der Hub D1 in der Regel kleiner als 3 µm.

Die vorliegende Erfindung löst also die Aufgabe, einen im Mikrometer-Bereich tolerierten Überlastkörper in einen Halbleiter-Drucksensor einzubauen und so zu fixieren, daß keine störende Beeinflußung im Arbeitsbereich des Drucksensors möglich ist. Der Hub D1 und der Abstand D2 zwischen der Auflagefläche des Überlastkörpers und der Membran können unter Berücksichtigung der genannten Einschränkungen möglichst klein gestaltet werden.

Die Erfindung wird im folgenden anhand der Zeichnung näher erläutert.

FIG 1 zeigt einen Drucksensor ohne Überlastsicherung.

FIG 2 zeigt einen Drucksensor mit Überlastsicherung nach der Erfindung.

FIG 3 bis 8 erläutern verschiedene Möglichkeiten zur Herstellung eines Drucksensors nach der Erfindung.

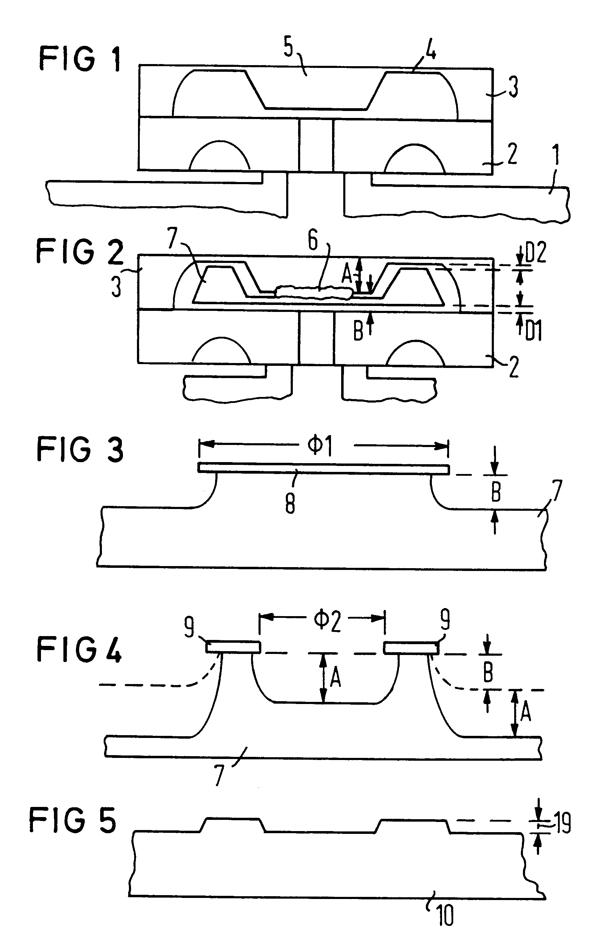

FIG 1 zeigt einen Ringmembran-Drucksensor ohne Überlastsicherung. Ein solcher Drucksensor kann mit einem Verfahren zur Erzeugung von Strukturen in der Mikromechanik nach DE-A-35 34 860 hergestellt werden. Ein solcher Drucksensor besitzt ein Gehäuse 1 mit einem Druckeinlaß, einen Trägerchip 2 mit einem Druckeinlaß und einen Membranchip 3 mit einer Membran 4 und einer Mittelinsel 5 innerhalb der Membran 4. Der Trägerchip 2 kann für hochgenaue Anwendungen eine zusätzliche Ringnut an der Rückseite zur Entkopplung des Membranchips 3 vom Gehäuse 1 besitzen.

Sowohl der Trägerchip 2 als auch der Membranchip 3 besitzen unterschiedlich tiefe Strukturen. Zur Erzeugung von Strukturen auf einem Festkörper in der Mikromechanik mit unterschiedlichen Tiefen werden mindestens zwei unterschiedliche, selektiv entfernbare Ätzmasken hintereinander auf dem Festkörper aufgebracht. Nach Erzeugung der letzten Ätzmaske erfolgt ein erster Strukturierungsschritt. Nach Entfernen der zuletzt aufgebrachten Ätzmaske erfolgt mit Hilfe der dann auf dem Festkörper verbleibenden Ätzmasken ein weiterer Strukturierungsschritt. Entfernen einer weiteren Ätzmaske und Erzeugen eines weiteren Strukturierungsschritts werden so lange wiederholt, bis so viele Strukturierungsschritte durchgeführt worden sind, wie ursprünglich Ätzmasken auf dem Festkörper vorhanden gewesen sind.

Selektiv entfernbare Ätzmasken können beispielsweise eine Ätzmaske aus einer Titan-Gold-Schicht und eine Ätzmaske aus Fotolack sein.

Zur Herstellung des Trägerchips 2 kann beispielsweise in einem ersten Strukturierungsschritt das durchgehende Loch vorgeätzt werden bis zu einer Tiefe von etwa 300 µm, im zweiten Strukturierungsschritt kann dieses Loch vollständig durchgeätzt werden bis zu einer Tiefe von etwa 400 µm und kann eine Ringnut mit einer Tiefe von 100 µm um dieses durchgehende Loch geätzt werden.

Zur Herstellung des Membranchips 3 kann im ersten Ätzschritt die Vorätzung der Ringmembran vorgenommen werden. Im zweiten Ätzschritt wird die Feinätzung bis zur Enddicke der Ringmembran zusammen mit der durch Ätzen erfolgenden Verdünnung der Mittelinsel 5 vorgenommen. In dem speziellen Fall des Membranchips 3 kann der zweite Ätzschritt aus einem elektrochemischen Feinätzverfahren mit automatischem Ätzstopp bestehen. Das Abätzen der Mittelinsel 5 ist notwendig, um die freie Beweglichkeit der Ringmembran zu ermöglichen.

FIG 2 zeigt einen Drucksensor ähnlich zu FIG 1 mit einem Überlastkörper 7. Der mit der Überlastsicherung versehene Drucksensor nach FIG 2 besteht im wesentlichen aus drei Einzelteilen, die an den in FIG 2 markierten Stellen miteinander verbunden sind. Die drei Komponenten sind ein konventioneller Membranchip 3, ein Trägerchip 2 und ein Überlastkörper 7. Der Membranchip 3 ist konventionell ähnlich zu dem Membranchip 3 bei FIG 1 aufgebaut. Lediglich die Mittelinsel 5, die bei einem Drucksensor nach FIG 1 um ca. 50 µm zurückgeätzt ist, wird bei einem Drucksensor mit Überlastsicherung dünner ausgeführt, um Platz für einen handhabbaren, stabilen und damit etwas dickeren Überlastkörper 7 zuschaffen. Der Überlastkörper 7 ist im Ausführungsbeispiel nach FIG 2 rotationssymmetrisch mit dem in FIG 2 dargestellten axialen Schnittprofil. Der Mittelbereich des Überlastkörpers 7 ist starr mit der Mittelinsel 5 des Membranchips 3 verbunden. Die ringförmige obere Auflagefläche des Überlastkörpers 7, die im Bereich der Membran des Membranchips 3 angeordnet ist und einen Abstand D2 zu dieser Membran 4 aufweist, hat im unbelasteten Zustand einen Abstand von ca. 5 µm von der Ringmembrane 4 des Membranchips 3. In diesem unbelasteten Zustand hat die untere Fläche des Überlastkörpers 7 einen Abstand D1 zum Trägerchip 2. Der Trägerchip 2 ist ausgeführt wie bei einem Drucksensor nach FIG 1. Das Mittelloch des Trägerchips 2 dient zur Zuführung des Referenzdruckes auf die Rückseite der Membran 4.

Bei Druckbelastung der Oberseite (Vorderseite der Membran 4) des Membranchips 3 bewegt sich die Mittelinsel 5 mit dem mit dieser Mittelinsel 5 verbundenen Überlastkörper 7 nach unten in Richtung auf den Trägerchip 2 hin. Ab einem gewissen Druck P1, der über die Bemessung des Abstandes D1 einstellbar ist, liegt der Überlastkörper 7 auf dem Trägerchip 2 auf. Der Abstand D1 zwischen der Auflagefläche des Überlastkörpers 7 und der Membran 4 wird so eingestellt, daß das Aufliegen der Membran auf dem Überlastkörper 7 bei ca. 2- bis 5-fachen Nenndruck stattfindet.

Wenn der Überlastkörper 7 bei einem gewissen Druck P1 auf dem Trägerchip 2 aufliegt, kann eine weitere Drucksteigerung keine Bewegung der Mittelinsel 5 auf den Trägerchip 2 hin mehr bewirken. Lediglich die jetzt quasi starr eingespannte Ringmembrane 4 wird bei weiterer Drucksteigerung weiter durchgebogen und beginnt ab einem über den Abstand D2 einstellbaren Druck P2, auf der oberen Auflagefläche des Überlastkörpers 7 aufzuliegen. In Folge dessen wird ab Drücken, die größer sind als der Druck P2, ein Großteil der auf die Membran 4 einwirkenden Kraft auf den Überlastkörper 7 übertragen. Die mögliche Grenzbelastung der Ringmembrane 4 steigt durch Reduzierung der effektiven freischwebenden Membranfläche drastisch an.

Die Erfindung ist auch für nicht-ringförmige Membranen 4 verwendbar.

FIG 3 bis 8 erläutern verschiedene Herstellungsmöglichkeiten eines Drucksensors. Trägerchip 2 und Membranchip 3 sind konventionell aufgebaut. Die Beschreibung kann sich daher auf die Herstellung des Überlastkörpers 7 und den Einbau dieses Überlastkörpers 7 in den Halbleiter-Drucksensor beschränken. Das hier beschriebene Verfahren ist sowohl mit einzelnen Halbleiter-Chips als auch im Scheibenverbund durchführbar. Bei einer Herstellung von Drucksensoren im Scheibenverbund sind die FIG 3 bis 8 und deren Erläuterung als Darstellungen von Scheibenausschnitten zu betrachten.

FIG 3 und 4 erläutern die Herstellung des Überlastkörpers 7. Nach der Querschnittszeichnung von FIG 3 wird bei einer Silizium-Halbleiterscheibe, die dicker als der Membranchip 3 sein muß, ein kreisförmiger Bereich in einem ersten Fototechnik-Schritt mit einer Maskierschicht 8 gegen Silizium-Ätzung maskiert. Der Durchmesser des mit der Maskierschicht 8 versehenen kreisförmigen Bereichs entspricht dem Außendurchmesser der Silizium-Membrane 4. Die Ätztiefe der nachfolgenden naßchemischen Silizium-Ätzung beträgt etwas mehr als die Größe B, wie sie in FIG 2 als der Abstand der Mittelinsel 5 im unbelasteten Zustand vom Trägerchip 2 angegeben ist. Wie in FIg 2 ebenfalls angegeben ist, hat die Mittelinsel 5 eine Dicke A. Daher hat der Membranchip 3 insgesamt eine Dicke A + B.

In einem zweiten Fototechnikschritt, der ähnlich zur Herstellung von Trägerchip 2 und Membranchip 3 analog zu einem in DE-A-35 34 860 beschriebenen Verfahren zur Erzeugung von Strukturen in der Mikromechanik erfolgen kann, wird konzentrisch zu dem beim ersten Fototechnikschritt hergestellten kreisförmigen Bereich ein Ringbereich am Rand des beim ersten Fototechnikschritt hergestellten kreisförmigen Bereiches definiert (FIG 4). Die Ätzmaske 9 entspricht jetzt ungefähr der Geometrie der Ringmembrane 4. Die Gesamtdicke dieser Ätzmaske 9 wird aus einem weiter unten erläuterten Grund auf eine Dicke von ca. 5 µm eingestellt. Mit dieser Ringmaske 9 wird jetzt mit einer Ätztiefe etwas größer als A (Dicke der Mittelinsel 5) nochmals eine Silizium-Ätzung durchgeführt.

Der kreisförmige Bereich der Maskierschicht 8 von FIG 3 hat einen Durchmesser von PHI1. Die Ätzmaske 9, die ringförmig ist, hat einen Außendurchmesser von etwa PHI1 und einen zum Außendurchmesser konzentrischen Innendurchmesser PHI2. Der Außendurchser der Ätzmaske 9 stimmt etwa mit dem Außendurchmesser der Ringmembran 4 überein. Der Innendurchmesser der Ätzmaske 9 stimmt etwa mit dem Innendurchmesser der Ringmembran 4 überein.

Die Halbleiterscheibe, aus der der Überlastkörper 7 entsteht, ist damit fertig für den Zusammenbau. Außerhalb der Ätzmaske 9 weist der Überlastkörper 7 eine Ätztiefe von A + B + Toleranzbemessung, im Inneren Bereich der ringförmigen Ätzmaske 9 weist der Überlastkörper 7 eine Ätztiefe A + Toleranzbemessung auf. Der erhabene Ringbereich des Überlastkörpers unmittelbar unter der Ätzmaske 9 ist in Folge der unvermeidbaren Unterätzungen etwas schmäler als der Membranbereich 4 des Membranchips 3.

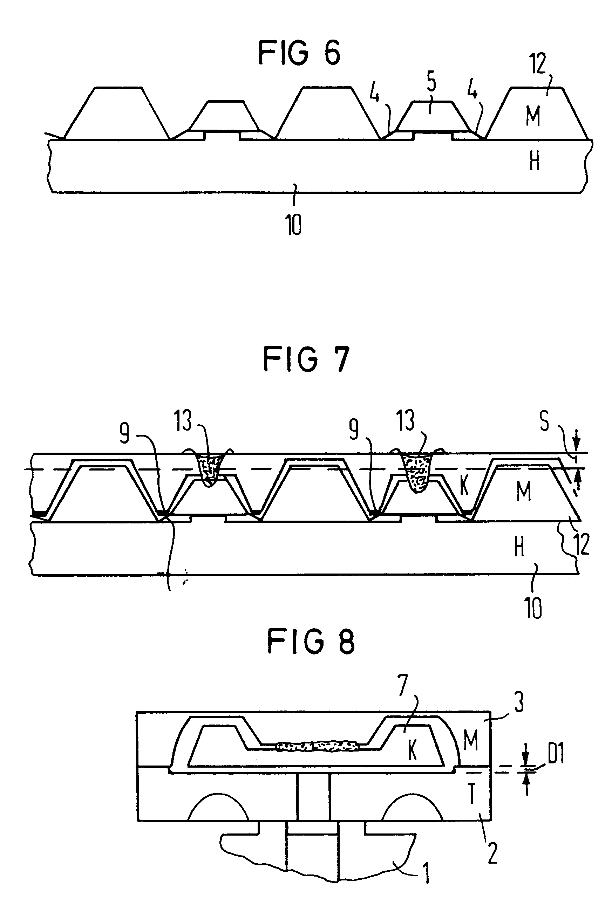

FIG 5 zeigt eine Silizium-Hilfsscheibe 10, die für den Zusammenbau des Halbleiter-Drucksensors verwendet wird. Die Hilfsscheibe 10 besitzt Höcker mit einer Höckerhöhe 19 von etwa 15 µm. Diese Höcker sind auf der Hilfsscheibe 10 im gleichen Raster angeordnet wie die Membranchips 3 auf einer Membranchipscheibe. Der Höckerdurchmesser ist etwas kleiner als der Innendurchmesser der Membrane 4.

Auf diese Hilfsscheibe 10 wird gemäß FIG 6 die Membranchip-Scheibe 12 unter leichtem Druck mit der Oberseite nach unten so justiert aufgeklebt bzw. aufgewachst, daß die Bereiche der Mittelinseln 5 auf die Höcker der Hilfsscheibe 10 zu liegen kommen. Die Membrane 4 werden infolge dessen durchgebogen. Ist die Höckerhöhe 19 ein x-faches des Hubes der Mittelinsel 5 bei Nenndruck, so entspricht die Durchbiegung der Membran 4 im so gemäß FIG 6 aufgeklebten Zustand der Belastung mit x-fachem Nenndruck.

In die gemäß FIG 6 mit der Hilfsscheibe 10 (H) verbundene (verklebte) Membran-Scheibe 12 (M) wird die Überlastkörper-Scheibe K gemäß FIG 7 mit der bearbeiteten Seite nach unten eingelegt und leicht belastet. Die ringförmige Maskierschicht 9 der Überlastkörper-Scheibe K liegt dann auf der durch Aufkleben verstärkten Membrane 4 auf. In diesem Zustand wird derjenige Bereich der Überlastkörper-Scheibe K, der über der Mittelinsel 5 der Membranchip-Scheibe 12 (M) liegt, durch lokales Erhitzen mit einem Laserstrahl durch Laseraufschmelzung 13 mit der Mittelinsel 5 verschmolzen. Wellenlänge und Energie des Laserstrahls sind dabei so zu wählen, daß die Überlastkörper-Scheibe K im Strahlbereich flüssig wird und das Silizium der Mittelinsel 5 oberflächig aufschmilzt. Dadurch wird trotz der Spaltes zwischen der Überlastkörper-Scheibe K und der Membranchip-Scheibe 12 (M) eine mechanisch stabile und temperaturfeste Verbindung 6 hergestellt.

Die zur Justierung des Laserstrahles notwendigen Justiermarken können konventionell durch Rückseiten-Fototechnik auf der Überlastkörper-Scheibe K aufgebracht werden. Einfacher ist noch das Herausbrechen zweier Membranen 4, die diametral einander gegenüberliegend im Randbereich der Scheibe angeordnet sind. Mit diesen beiden Löchern kann das ganze Scheibenpaket, das aus der Hilfsscheibe 10 (H), der Membranchip-Scheibe 12 (M) und der Überlastkörper-Scheibe K besteht, auf einem in der Laservorrichtung justierten Spannfutter (chuck) durch Einrasten in Justierstifte in eine definierte Lage gebracht werden.

Statt Laseraufschmelzung 13 ist im Bereich der festen Verbindung 6 zwischen dem Membranchip 3 und dem Überlastkörper 7 auch ein Verkleben oder eine sonstige feste Verbindung der Mittelinsel 5 des Membranchips 3 mit dem Überlastkörper 7 möglich. Beispielsweise wird auf die Mittelinsel 5 des Membranchips 3 oder in den Ringbereich des Überlastkörpers 7 im Inneren der Ätzmaske 9 eine kleine Klebermenge aufgebracht. Das Zusammenfügen der Überlastkörper-Scheibe K mit der Membranchip-Scheibe 12 (M) kann dabei ohne Justierhilfen geschehen, da diese beiden Scheiben ineinander einrasten.

Nach der Verbindung der Überlastkörper-Scheibe K mit der Membranchip-Scheibe 12 (M) und der Hilfsscheibe 10 (H) wird die dann sichtbare Oberfläche der Überlastkörper-Scheibe K dieses Scheibentripels abgeschliffen. Gemäß FIG 7 ist dabei der Schleifabtrag S so zu bemessen, daß die Membranchip-Scheibe 12 (M) zumindest leicht angeschliffen wird. Die Überlastkörper-Scheibe K ist nach erfolgtem Schleifabtrag S in die einzelnen Überlastkörper 7 zerlegt. Durch eine Reinigung werden die Ringspalte zwischen den Überlastkörpern 7 und der Membranchip-Scheibe 12 (M) freigelegt und durch diese Ringspalte hindurch werden die Maskierschichten 9 auf der Ringoberfläche der Überlastkörper 7 abgelöst. Die Membranen 4 haben damit einen Abstand von den Überlastkörpern 7, der genau der Dicke der Maskierschicht 9 entspricht.

Schließlich wird die Membranchip-Scheibe 12 (M) von der Hilfsscheibe 10 (H) abgelöst. Die Membranen 4 gehen dabei in die Ruhelage zurück. Die Überlastkörper 7 werden um den Betrag der Auslenkung durch die Höckerhöhe 19 in den Membranchip 3 hineingezogen. Die Höckerhöhe 19 bestimmt damit den Abstand D1.

Die Membranchip-Scheibe 12 (M), in die die Überlastkörper 7 nun integriert sind, kann jetzt in konventioneller Weise mit den Trägerchips 2 bzw. mit einer Trägerchip-Scheibe verbunden werden. Die Einstellung der Abstände D1 und D2 wird bei einem Verfahren nach der Erfindung gewissermaßen selbstjustierend bewirkt. Die Höckerhöhe 19 der Hilfsscheibe 10 (H) bestimmt den Abstand D1 und die Dicke der Maskierschicht 9 beim zweiten Fototechnikschritt bezüglich der Herstellung der Überlastkörper-Scheibe K bestimmt den Abstand D2.

Wie in FIG 8 gezeigt ist, kann der Abstand D1 auch durch Einätzung einer Vertiefung in den Trägerchip 2 eingestellt werden. In diesem Fall kann als Hilfsscheibe 10 (H) eine ebene Scheibe dienen.

## Patentansprüche

1. Silizium-Membran-Drucksensor mit einem Trägerchip (2) und einem Membranchip (3), die beide in einem äußeren Bereich miteinander verbunden sind, und einem Überlastkörper (7) im Inneren zwischen Trägerchip (2) und Membranchip (3), **dadurch gekennzeichnet**, daß der Überlastkörper (7) an einer Mittelinsel (5) des Membranchips (3) eine Verbindung (6) mit dem Membranchip (3) aufweist und im unbelasteten Zustand einen ersten Abstand (D1) zum Trägerchip (2) besitzt.

2. Drucksensor nach Anspruch 1, **dadurch gekennzeichnet,** daß der Überlastkörper (7) im unbelasteten Zustand einen zweiten Abstand (D2) zur Membrane (4) des Membranchips (3) aufweist.

3. Drucksensor nach Anspruch 1 oder 2, **gekennzeichnet durch** eine ringförmige Ausführung.

4. Drucksensor nach einem der Ansprüche 1 bis 3, **gekennzeichnet durch** eine zusätzliche Ringnut an der dem Membranchip (3) abgewandten Seite des Trägerchips (2) zur Entkopplung des Membranchips (3) von einem Gehäuse (1) des Drucksensors.

5. Verfahren zur Herstellung eines Drucksensors nach einem der Ansprüche 1 bis 4, **dadurch gekennzeichnet,** daß auf einer Hilfsscheibe (10) wenigstens ein Höcker angeordnet wird, daß eine Membranchip-Scheibe (12) mit mindestens einem Membranchip (3) unter Druck mit der dem Trägerchip (2) abgewandten Seite so auf die Hilfsscheibe (10) aufgebracht wird, daß wenigstens ein Mittelinsel- Bereich der Membranchips auf einen Höcker zu liegen kommt, daß in die mit der Hilfsscheibe (10) verbundene Membranchip-Scheibe (12) eine Überlastkörper-Scheibe (K) eingelegt und belastet wird, daß dann derjenige Teil des Überlastkörpers (7), der über der Mittelinsel (5) des Membranchips (3) liegt, durch lokales Erhitzen oder durch Kleben mit dieser Mittelinsel (5) verbunden wird, daß die Oberfläche der Überlastkörper-Scheibe (K) abgeschliffen wird, bis wenigstens ein Überlastkörper (7) vereinzelt ist, und daß die Hilfsscheibe (10) von der Membranchip-Scheibe (12) abgelöst wird.

6. Verfahren zur Herstellung eines Drucksensors nach einem der Ansprüche 1 bis 4, **dadurch gekennzeichnet,** daß auf eine Hilfsscheibe (10) eine Membranchip-Scheibe (12) mit der dem Trägerchip (2) abgewandten Seite aufgebracht wird, daß in die mit der Hilfsscheibe (10) verbundene Membranchip-Scheibe (12) eine Überlastkörper-Scheibe (K) eingelegt und belastet wird, daß dann derjenige Teil des Überlastkörpers (7), der über der Mittelinsel (5) des Membranchips (3) liegt, durch lokales Erhitzen oder durch Kleben mit dieser Mittelinsel (5) verbunden wird, daß die Oberfläche der Überlastkörper-Scheibe (K) abgeschliffen wird, bis wenigstens ein Überlastkörper (7) vereinzelt ist, daß die Hilfsscheibe (10) von der Membranchip-Scheibe (12) abgelöst wird, und daß der erste Abstand (D1) durch Einbringen einer Vertiefung in den Trägerchip (2) eingestellt wird.

7. Verfahren nach Anspruch 5 oder 6, **dadurch gekennzeichnet,** daß mehrere Überlastkörper (7) im Scheibenverband hergestellt werden.

8. Verfahren nach Anspruch 5 oder 6, **dadurch gekennzeichnet,** daß der Überlastkörper (7) mit Hilfe einer Ätzmaske (9) erzeugt wird und daß die Dicke der Ätzmaske (9) zur Einstellung des zweiten Abstands (D2) dient.

## Claims

1. Silicon membrane pressure sensor comprising a carrier chip (2) and a membrane chip (3), both being joined together in an outer region, and an overload body (7) in the interior between carrier chip (2) and membrane chip (3), characterised in that the overload body (7) has, at a central island (5) of the membrane chip (3), a joint (6) to the membrane chip (3) and is at a first distance (D1) from the carrier chip (2) in the unloaded state.

2. Pressure sensor according to Claim 1, characterised in that the overload body (7) is at a second distance (D2) from the membrane (4) of the membrane chip (3) in the unloaded state.

3. Pressure sensor according to Claim 1 or 2, characterised by an annular construction.

4. Pressure sensor according to one of Claims 1 to 3, characterised by an additional annular groove at the side of the carrier chip (2) remote from the membrane chip (3) for the purpose of decoupling the membrane chip (3) from a housing (1) of the pressure sensor.

5. Method of producing a pressure sensor according to one of Claims 1 to 4, characterised in that at least one bump is arranged on an auxiliary wafer (10), in that a membrane chip wafer (12) comprising at least one membrane chip (3) is applied under pressure to the auxiliary wafer (10) by means of the side remote from the carrier chip (2) in such a way that at least one central island region of the membrane chip comes to rest on a bump, in that an overload body wafer (K) is placed in the membrane chip wafer (12) joined to the auxiliary wafer (10) and is loaded, in that that part of the overload body (7) situated above the central island (5) of the membrane chip (3) is joined to said central island (5) by local heating or by gluing, in that the surface of the overload body wafer (K) is ground away until at least one overload body (7) is separated, and in that the auxiliary wafer (10) is separated from the membrane chip wafer (12).

6. Method of producing a pressure sensor according to one of Claims 1 to 4, characterised in that a membrane chip wafer (12) is applied to an auxiliary wafer (10) by means of the side remote from the carrier chip (2), in that an overload body wafer (K) is placed in the membrane chip wafer (12) joined to the auxiliary wafer (10) and is loaded, in that that part of the overload body (7) situated above the central island (5) of the membrane chip (3) is joined to said central island (5) by local heating or by gluing, in that the surface of the overload body wafer (K) is ground away until at least one overload body (7) is separated, in that the auxiliary wafer (10) is separated from the membrane chip wafer (12), and in that the first distance (D1) is adjusted by introducing a recess into the carrier chip (2).

7. Method according to Claim 5 or 6, characterised in that a plurality of overload bodies (7) is produced in the wafer assembly.

8. Method according to Claim 5 or 6, characterised in that the overload body (7) is created with the aid of an etching mask (9) and in that the thickness of the etching mask (9) serves to adjust the second distance (D2).

## Revendications

1. Capteur de pression à membrane en silicium comportant une plaquette de support (2) et une plaquette formant membrane (3), qui sont reliées entre elles dans une zone extérieure, et un corps de surcharge (7) situé à l'intérieur entre la plaquette de support (2) et la plaquette formant membrane (3), caractérisé par le fait qu'au niveau d'un îlot médian (5) de la plaquette formant membrane (3), est prévue une liaison (6) entre le corps de surcharge (7) et la plaquette formant membrane (3), et qu'à l'état non chargé, le corps de surcharge (7) est situé à une première distance (D1) de la plaquette de support.

2. Capteur de pression suivant la revendication 1, caractérisé par le fait qu'à l'état non chargé, le corps de surcharge (7) est situé à une seconde distance (D2) de la membrane (4) de la plaquette formant membrane (3).

3. Capteur de pression suivant la revendication 1 ou 2, caractérisé par une forme de réalisation annulaire.

4. Capteur de pression suivant l'une des revendications 1 à 3, caractérisé par une gorge annulaire supplémentaire ménagée dans la face de la plaquette de support (2), tournée à l'opposé de la plaquette formant membrane (3), pour découpler cette dernière par rapport à un boîtier (1) du capteur de pression.

5. Procédé pour fabriquer un capteur de pression suivant l'une des revendications 1 à 4, caractérisé par le fait qu'on forme au moins un bossage sur un disque auxiliaire (10), qu'on dépose un disque (12) portant la plaquette formant membrane comportant au moins une plaquette formant membrane (13), sous pression et avec sa face tournée à l'opposé de la plaquette de support (2), appliqué contre le disque auxiliaire (10) de sorte qu'au moins une zone en forme d'îlot médian de la plaquette de membrane vient s'appliquer sur un bossage, qu'on insère un disque (K) du corps de surcharge dans le disque (12) portant la plaquette formant membrane, qui est raccordé au disque auxiliaire (10) et qu'on le charge, puis qu'on raccorde la partie du corps de surcharge (7), qui est située au-dessus de l'îlot médian (5) de la plaquette formant membrane (3), à cette îlot au moyen d'un chauffage local ou par collage, qu'on meule la surface du disque (K) du corps de surcharge jusqu'à séparer au moins un corps de surcharge (7) et qu'on retire le disque auxiliaire (10) du disque (12) portant la plaquette formant membrane.

6. Procédé pour fabriquer un capteur de pression suivant l'une des revendications 1 à 4, caractérisé par le fait qu'on dépose un disque (12) portant la plaquette formant membrane par sa face tournée à l'opposé de la plaquette de support (2) sur un disque auxiliaire (10), qu'on insère un disque (K) du corps de surcharge dans le disque (12) de la plaquette formant membrane, raccordé au disque auxiliaire (10) et qu'on le charge, qu'on raccorde ensuite la partie du corps de support (7), qui est située au-dessus de l'îlot médian (5) d'une plaquette formant membrane (3), à cet îlot par chauffage local ou par collage, qu'on meule la surface du disque (K) du corps de surcharge jusqu'à séparer au moins un corps de surcharge (7), qu'on retire le disque auxiliaire (10) du disque (12) portant la plaquette formant membrane et qu'on règle la première distance (D1) en ménageant un renfoncement dans la plaquette de support (2).

7. Procédé suivant la revendication 5 ou 6, caractérisé par le fait qu'on fabrique plusieurs corps de surcharge (7) dans une ébauche à disques.

8. Procédé suivant la revendication 5 ou 6, caractérisé par le fait qu'on forme le corps de surcharge (7) à l'aide d'un masque (9) de corrosion et qu'on utilise l'épaisseur du masque de corrosion (9) pour régler la seconde distance (D2).
